# EUROPÄISCHE PATENTSCHRIFT

(11) **EP 3 218 617 B1**
(45) Veröffentlichungstag und Bekanntmachung des Hinweises auf die Patenterteilung: **10.04.2019**
(21) Anmeldenummer: 15807592.9
(22) Anmeldetag: 05.11.2015
(51) Int. Cl.: F16D 69/00, F16D 13/00, F16D 13/64

(54) **DRUCKPLATTE FÜR EINE REIBUNGSKUPPLUNG UND/ODER BREMSE SOWIE VERFAHREN ZUR HERSTELLUNG EINER DRUCKPLATTE**
PRESSURE PLATE FOR A FRICTION CLUTCH AND/OR BRAKE AND METHOD FOR PRODUCING A PRESSURE PLATE
PLATEAU DE PRESSION POUR EMBRAYAGE À FRICTION ET/OU FREIN ET PROCÉDÉ DE FABRICATION D'UN PLATEAU DE PRESSION

(30) Priorität: 14.11.2014 DE 102014223255; 19.12.2014 DE 102014226513
(43) Veröffentlichungstag der Anmeldung: 20.09.2017
(73) Patentinhaber: Schaeffler Technologies AG & Co. KG, 91074 Herzogenaurach (DE)
(72) Erfinder: AGNER, Ivo, 77815 Bühl (DE)
(86) Internationale Anmeldenummer: PCT/DE2015/200494
(87) Internationale Veröffentlichungsnummer: WO 2016/074675

(56) Entgegenhaltungen:
- DE-A1- 10 015 206
- DE-A1- 19 712 203
- US-A1- 2003 097 754
- US-A1- 2003 168 303

## Beschreibung

Die Erfindung betrifft ein Verfahren zur Herstellung der Druckplatte einer Reibungskupplung gemäß dem Oberbegriff des Patentanspruchs 1, mit deren Hilfe ein von einem Kraftfahrzeugmotor kommendes Drehmoment reibschlüssig insbesondere an eine mit einer Getriebeeingangswelle eines Kraftfahrzeuggetriebes gekoppelte Kupplungsscheibe übertragen werden kann.

Es ist bekannt eine als Reibfläche verwendete Axialseite einer Druckplatte für Reibungskupplung durch Drehen, Schleifen oder Läppen spanend zu bearbeiten, um gewünschte Reibeigenschaften der Reibfläche vorzusehen.

Ferner ist es aus DE 10 2013 205 032 A1 bekannt bei einer Druckplatte für eine Reibungskupplung eine Reibfläche der Druckplatte mit einer eine erhöhte Wärmeleitfähigkeit aufweisenden Wärmeabführbeschichtung zu beschichten.

Ein Verfahren zur Herstellung der Druckplatte einer Reibungskupplung, das auf den Oberbegriff des Patentanspruchs 1 lesbar ist, ist aus der US 2003/0168303 A1 bekannt.

Es besteht ein ständiges Bedürfnis die Herstellungskosten von Reibungskupplungen zu senken.

Es ist die Aufgabe der Erfindung Maßnahmen aufzuzeigen, die eine kostengünstige Reibungskupplung ermöglichen.

Die Lösung der Aufgabe erfolgt erfindungsgemäß durch ein Verfahren zur Herstellung der Druckplatte einer Reibungskupplung mit den Merkmalen des Anspruchs 1.

Eine Druckplatte, insbesondere für eine Reibungskupplung und/oder Bremse, ist ausgestattet mit einem Plattenkörper, wobei der Plattenkörper mindestens eine Reibfläche zur reibschlüssigen Übertragung eines Drehmoments, insbesondere an eine Kupplungsscheibe, aufweist, wobei der Plattenkörper zumindest im Bereich der Reibfläche durch Strahlen mit einem Strahlmittel, insbesondere Sandstrahlen und/oder Verdichtungsstrahlen, oberflächenbehandelt ist. Insbesondere kann das Strahlen mit Hilfe eines Strahlmittels und/oder Strahlguts erfolgen. Vorzugsweise kann die Druckplatte für eine Reibungskupplung und/oder eine Bremse verwendet werden.

Durch das Strahlen kann eine Oberfläche des Plattenkörpers der Druckplatte kostengünstig und leicht gereinigt werden. Hierbei kann insbesondere die Reibfläche des Plattenkörpers abrasiv oder nicht-abrasiv bearbeitet werden. Hierbei kann ein fertigungstechnisch komplizierterer und kostenintensiver spanabhebender Fertigungsprozess mit Hilfe eines verschleißanfälligen und wartungsintensiven Spanwerkzeugs, wie beispielsweise beim Drehen, Fräsen, Schleifen, vermieden werden. Gleichzeitig ermöglicht das Strahlen eine vergleichsweise hohe und/oder konstante Startrauigkeit der Reibfläche, so dass sich ein schneller und effektiver Einlaufvorgang zur Ausbildung des Reibkontakts an der Reibfläche ergibt. Fertigungs- und Montagetoleranzen könne dadurch leicht ausgeglichen werden, so dass die Toleranzanforderungen der an den Reibkontakt beteiligten Bauteile reduziert werden können, wodurch eine kostengünstigere Herstellung der Reibungskupplung ermöglicht ist. Zusätzlich treffen beim Strahlen Strahlmittel mit einer entsprechend hohen Geschwindigkeit und einem entsprechend hohen Impuls auf die Oberfläche des Plattenkörpers auf, wodurch sich eine Materialverdichtung der durch Strahlen oberflächenbehandelten Oberfläche des Plattenkörpers ergibt. Das durch das Strahlen verdichtete Material des Plattenkörpers weist einen erhöhten Verschleißwiderstand auf, so dass die Lebensdauer der Druckplatte und einer Reibungskupplung mit einer derartigen Druckplatte entsprechend erhöht werden kann. Durch das Strahlen der Reibfläche des Plattenkörpers der Druckplatte kann eine für einen Einlaufvorgang günstige Startrauigkeit und eine verschleißfeste Verdichtung des Plattenkörpers erreicht werden, wodurch bei geringen Toleranzanforderungen für die Bauteile einer Reibungskupplung eine hohe Lebensdauer erreicht werden kann, so dass eine kostengünstige Reibungskupplung mit einer hohen Lebensdauer ermöglicht ist.

Die Druckplatte kann in einer Reibungskupplung als ein eine der Reibflächen ausbildendes Bauteil verwendet werden und hierzu ausgeformt sein. Beispielsweise kann die Druckplatte als eine insbesondere in axialer Richtung bewegungsfeste Gegenplatte ausgestaltet sein, die insbesondere über einen Drehschwingungsdämpfer, beispielsweise ein Zweimassenschwungrad, mit einer Antriebswelle eines Kraftfahrzeugmotors gekoppelt sein kann, um in die Reibungskupplung das von dem Kraftfahrzeugmotor kommende Drehmoment einleiten zu können. Die Druckplatte kann zusätzlich oder alternativ als eine Anpressplatte der Reibungskupplung ausgestaltet sein, die relativ zur Gegenplatte axial verlagert werden kann, um einen Reibbelag, insbesondere einer mit einer Getriebeeingangswelle eines Kraftfahrzeuggetriebes gekoppelten, Kupplungsscheibe zwischen der Gegenplatte und der Anpressplatte wahlweise reibschlüssig verpressen zu können. Bei der Reibungskupplung kann in dem Fall einer Mehrscheibenkupplung mindestens eine Zwischenplatte oder in dem in dem Fall einer Lamellenkupplung mindestens eine Stahllamelle in axialer Richtung zwischen der Anpressplatte und der Gegenplatte vorgesehen sein. Zusätzlich oder alternativ kann eine zwischen der Anpressplatte und der Gegenplatte vorgesehene und eine Reibfläche ausbildende Platte, insbesondere die Zwischenplatte oder die Stahllamelle, durch die Druckplatte ausgebildet sein. Die Druckplatte ist insbesondere einstückig ausgebildet. Insbesondere ist es möglich mehrere Oberflächenbearbeitungen durch Strahlen hintereinander durchzuführen, die sich jeweils in ihren Prozessparametern unterscheiden. Beispielsweise kann die entsprechende Oberfläche zunächst mit Stahl- und/oder Glasperlen gestrahlt werden, um den Plattenkörper zu verdichten und nachfolgend mit Korundkörnern, um die Rauigkeit der Oberfläche zu erhöhen.

Insbesondere weist eine durch Strahlen oberflächenbehandelt Oberfläche eine Rautiefe R_{z} von 5 µm ≤ R_{z} ≤ 40 µm, insbesondere 10 µm ≤ R_{z} ≤ 30 µm und vorzugsweise 15 µm ≤ R_{z} ≤ 20 µm auf. Rautiefe R_{z} wird insbesondere nach DIN EN ISO 4287 (1998) bestimmt. Die Oberfläche, insbesondere die Reibfläche, weist dadurch eine maximale Rauheitsprofilhöhe auf, die sich für einen effektiven und schnellen Einlaufvorgang der zugehörigen Reibpaarung eignet.

Vorzugsweise ist die durch Strahlen oberflächenbehandelt Oberfläche durch Verdichtungsstrahlen verdichtet. Durch das Verdichtungsstrahlen kann eine plastische Verformung erreicht werden, die eine durchaus gewünschte Eigenspannung im Plattenkörper erzeugt und so die Oberflächenhärte und die Dauerfestigkeit deutlich erhöht. Beim Verdichtungsstrahlen, insbesondere mit Stahl- und/oder Glaskugeln als Strahlmittel, kann das im Wesentlichen kugelförmige Strahlmittel mittels Druckluft beschleunigt werden und kann aus Düsen austretend auf die Oberfläche auftreffen. Dadurch wird die Oberfläche gezielt verfestigt, verdichtet und/oder geglättet. Zudem können Zugspannungen im Plattenkörper im Bereich der oberflächenbehandelt Oberfläche abgebaut werden.

Besonders bevorzugt ist die Reibfläche durch das Strahlen, insbesondere sowohl der Reibfläche als auch einer von der Reibfläche weg weisende Rückseite, zumindest teilweise ausgebeult, wobei insbesondere die Reibfläche radial außen von dem Plattenkörper hervorragt und radial innen in dem Plattenkörper versenkt ausgebildet ist. Hierbei wird die Erkenntnis ausgenutzt, dass durch das Strahlen mit der Verfestigung des Plattenkörpers Eigenspannungen in den Plattenkörper eingebracht werden können. Insbesondere wenn sowohl die Reibfläche als auch die Rückseite gestrahlt werden, können an unterschiedlichen Axialseiten des Plattenkörpers bewusst bestimmte Eigenspannungen eingebracht werden. Hierzu können vorzugsweise die Reibfläche und die Rückseite beim Strahlen mit unterschiedlichen Prozessparameter, insbesondere bezüglich einer Korngröße und/oder Kornform eines Strahlmittels, Menge des Strahlmittels und/oder Geschwindigkeit des Strahlmittels, bearbeitet werden. Durch die durch das Strahlen eingebrachten Eigenspannungen kann sich der Plattenkörper verbeulen, so dass sich insbesondere für den Plattenkörper eine Topfung ergibt. Die Ausbeulung beziehungsweise Topfung kann eine, insbesondere leichte, Konizität aufweisen, bei der zumindest ein Teil der radial äußeren Bereiche der Reibfläche im Vergleich zu den radial inneren Bereichen der Reibfläche stärker aus einer gemittelten Radialebene der Reibfläche von dem Plattenkörper weg hervortreten ("positive Topfung"). Dadurch ergibt sich im unbelasteten Zustand der Druckplatte in dem hervorstehenden radial äußeren Bereich ein engerer Lüftspalt zu einem Reibpartner als im radial inneren Bereich. Dadurch kann sichergestellt werden, dass trotz Herstellungs- und/oder Montagetoleranzen, insbesondere während eines Einlaufvorgangs, ein Reibkontakt auf einem größeren effektiven radialen Reibradius sichergestellt ist und/oder eine erhöhte Anpresskraft auf dem größeren Radius vorliegt. Dadurch kann auch während des Einlaufvorgangs im Vergleich zu einem Reibkontakt nur auf einem geringeren Radius aufgrund des größeren effektiven radialen Reibradius und/oder dem dort anliegenden höheren Anpressdruck ein entsprechend größeres Drehmoment übertragen werden.

Insbesondere ist eine von der Reibfläche weg weisende Rückseite des Plattenkörpers und/oder die Rückseite mit der Reibfläche verbindende Flächenbereiche des Plattenkörpers zumindest teilweise durch Strahlen, insbesondere Sandstrahlen und/oder Verdichtungsstrahlen, oberflächenbehandelt. Dadurch können auch von der Reibfläche verschiedene Oberflächen durch Strahlen oberflächenbearbeitet werden, beispielsweise um den Plattenkörper zu reinigen und/oder gezielt zu verfestigen. Insbesondere kann der Plattenkörper hierbei durch plastische Verformung zur Erreichung einer bestimmten Formgestaltung modelliert werden. Die Flächenbereiche, welche die Reibfläche mit der Rückseite verbinden, können insbesondere eine in radialer Richtung weisende Mantelfläche des Plattenkörpers umfassen.

Vorzugsweise ist der Plattenkörper aus einem, insbesondere aus Stahl oder einem Aluminiummaterial hergestellten, Metallblech hergestellt. Das Metallblech kann hierbei in der Regel kostengünstiger hergestellt werden als eine durch Metallguss hergestellte Druckplatte. Insbesondere kann die Druckplatte durch ein Ausstanzen des Plattenkörpers aus einem Metallblech und nachfolgender Oberflächenbehandlung durch Strahlen kostengünstig hergestellt werden.

Die Reibungskupplung ist ausgebildet zum Kuppeln einer Antriebswelle eines Kraftfahrzeugmotors mit mindestens einer Getriebeeingangswelle eines Kraftfahrzeuggetriebes mit einer mit der Antriebswelle koppelbaren Gegenplatte zum Einleiten eines Drehmoments, einer mit der Getriebeeingangswelle koppelbaren Kupplungsscheibe und einer relativ zur Gegenplatte verlagerbaren Anpressplatte zum reibschlüssigen Verpressen der Kupplungsscheibe zwischen der Gegenplatte und der Anpressplatte, wobei die Gegenplatte und/oder die Anpressplatte als eine Druckplatte, die wie vorstehend beschrieben aus- und weitergebildet sein kann, ausgestaltet ist. Durch das Strahlen der Reibfläche des Plattenkörpers der Druckplatte kann eine für einen Einlaufvorgang günstige Startrauigkeit und eine verschleißfeste Verdichtung des Plattenkörpers erreicht werden, wodurch bei geringen Toleranzanforderungen für die Bauteile einer Reibungskupplung eine hohe Lebensdauer erreicht werden kann, so dass eine kostengünstige Reibungskupplung mit einer hohen Lebensdauer ermöglicht ist.

Die Reibungskupplung, insbesondere Mehrscheibenkupplung und/oder Lamellenkupplung, ist ferner ausgebildet zum Kuppeln einer Antriebswelle eines Kraftfahrzeugmotors mit mindestens einer Getriebeeingangswelle eines Kraftfahrzeuggetriebes mit einer mit der Antriebswelle koppelbaren Gegenplatte zum Einleiten eines Drehmoments, mindestens einer relativ zur Gegenplatte axial verlagerbaren Zwischenplatte, insbesondere Stahllamelle, und einer relativ zur Gegenplatte und zur Zwischenplatte axial verlagerbaren Anpressplatte zum reibschlüssigen Verpressen von Reibbelägen einer mit der Getriebeeingangswelle koppelbaren Kupplungsscheibe zwischen der Gegenplatte und der Zwischenplatte sowie zwischen der Zwischenplatte und der Anpressplatte, wobei die Gegenplatte und/oder die Zwischenplatte und/oder die Anpressplatte als eine Druckplatte, die wie vorstehend beschrieben aus- und weitergebildet sein kann, ausgestaltet ist. Durch das Strahlen der Reibfläche des Plattenkörpers der Druckplatte kann eine für einen Einlaufvorgang günstige Startrauigkeit und eine verschleißfeste Verdichtung des Plattenkörpers erreicht werden, wodurch bei geringen Toleranzanforderungen für die Bauteile einer Reibungskupplung eine hohe Lebensdauer erreicht werden kann, so dass eine kostengünstige Reibungskupplung mit einer hohen Lebensdauer ermöglicht ist.

Die Erfindung betrifft ein Verfahren zur Herstellung der Druckplatte einer Reibungskupplung, die wie vorstehend beschrieben aus- und weitergebildet sein kann, bei dem ein, insbesondere aus einem Metallblech hergestellter, oberflächenunbehandelter Plattenkörper bereitgestellt wird und der Plattenkörper zumindest im Bereich der Reibfläche, insbesondere durch Sandstrahlen und/oder Verdichtungsstrahlen, mit einem Strahlmittel gestrahlt wird, wobei die durch Strahlen bearbeitete Oberfläche im Vergleich zur oberflächenunbehandelten Oberfläche eine höhere Rauigkeit und/oder eine höhere Materialverdichtung aufweist. Insbesondere kann das Strahlen mit Hilfe eines Strahlmittels und/oder Strahlguts erfolgen. Vorzugsweise kann die Druckplatte für eine Reibungskupplung und/oder eine Bremse verwendet werden. Durch das Strahlen der Reibfläche des Plattenkörpers der Druckplatte kann eine für einen Einlaufvorgang günstige Startrauigkeit und eine verschleißfeste Verdichtung des Plattenkörpers erreicht werden, wodurch bei geringen Toleranzanforderungen für die Bauteile einer Reibungskupplung eine hohe Lebensdauer erreicht werden kann, so dass eine kostengünstige Reibungskupplung mit einer hohen Lebensdauer ermöglicht ist.

Beim Strahlen einer von der Reibfläche weg weisenden Rückseite des Plattenkörpers werden im Vergleich zum Strahlen der Reibfläche unterschiedliche Prozessparameter, insbesondere bezüglich einer Korngröße und/oder Kornform eines Strahlmittels, Menge des Strahlmittels und/oder Geschwindigkeit des Strahlmittels, angewendet, wobei der Plattenkörper durch das Strahlen der Rückseite und der Reibfläche zur Einbringung einer Konizität in der Reibfläche ausgebeult wird und insbesondere durch die eingebrachte Konizität der Reibfläche die Reibfläche radial außen von dem Plattenkörper hervorragt und radial innen in dem Plattenkörper versenkt ausgebildet ist. Hierbei wird die Erkenntnis ausgenutzt, dass durch das Strahlen mit der Verfestigung des Plattenkörpers Eigenspannungen in den Plattenkörper eingebracht werden können. Durch die beim Strahlen vorgesehenen unterschiedlichen Prozessparameter für die Reibfläche und die Rückseite können an unterschiedlichen Axialseiten des Plattenkörpers bewusst bestimmte unterschiedliche Eigenspannungen eingebracht werden. Durch die durch das Strahlen eingebrachten Eigenspannungen kann sich der Plattenkörper verbeulen, so dass sich insbesondere für den Plattenkörper eine Topfung ergibt. Die Ausbeulung beziehungsweise Topfung kann eine, insbesondere leichte, Konizität aufweisen, bei der zumindest ein Teil der radial äußeren Bereiche der Reibfläche im Vergleich zu den radial inneren Bereichen der Reibfläche stärker aus einer gemittelten Radialebene der Reibfläche von dem Plattenkörper weg hervortreten ("positive Topfung"). Dadurch ergibt sich im unbelasteten Zustand der Druckplatte in dem hervorstehenden radial äußeren Bereich ein engerer Lüftspalt zu einem Reibpartner als im radial inneren Bereich. Dadurch kann sichergestellt werden, dass trotz Herstellungs- und/oder Montagetoleranzen, insbesondere während eines Einlaufvorgangs, ein Reibkontakt auf einem größeren effektiven radialen Reibradius sichergestellt ist und/oder eine erhöhte Anpresskraft auf dem größeren Radius vorliegt. Dadurch kann auch während des Einlaufvorgangs im Vergleich zu einem Reibkontakt nur auf einem geringeren Radius aufgrund der größeren effektiven Reibfläche und/oder dem dort anliegenden höheren Anpressdruck ein entsprechend größeres Drehmoment übertragen werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:

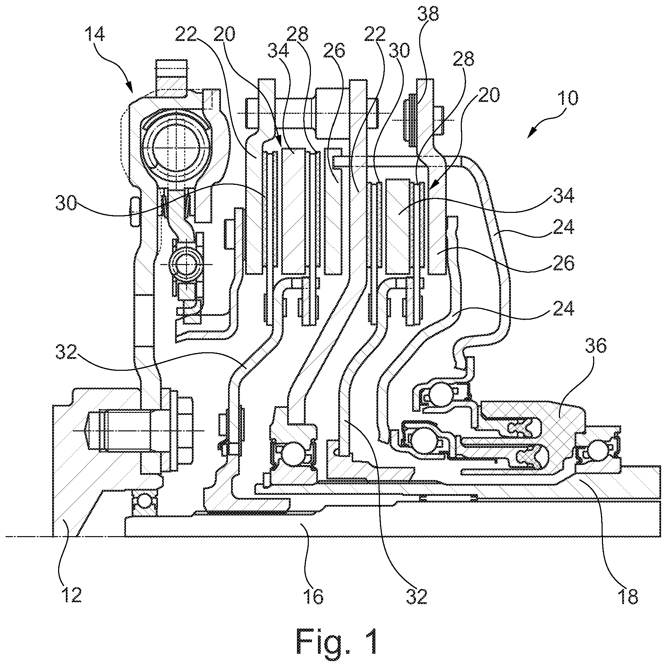

Fig. 1: eine schematische Schnittdarstellung einer Mehrscheibendoppelkupplung.

Die in Fig. 1 dargestellte Mehrscheibendoppelkupplung 10 kann eine Antriebswelle 12 über einen als Zweimassenschwungrad ausgestalteten Drehschwingungsdämpfer 14 mit einer ersten Getriebeeingangswelle 16 und einer zweiten Getriebeeingangswelle 18 kuppeln. Hierzu ist jeweils eine Mehrscheibenkupplung 20 vorgesehen, die jeweils eine mit der Antriebswelle 12 gekoppelte Gegenplatte 22 und eine mit Hilfe eines als starrer Betätigungstopf ausgestalteten Betätigungselement 24 verlagerbare Anpressplatte 26 aufweist, wobei die Anpressplatte 26 auch eine zwischen einem ersten Belagring 28 und einem relativ zum ersten Belagring 28 axial verschiebbaren zweiten Belagring 30 einer Kupplungsscheibe 32 angeordnete Zwischenplatte 34 verpressen kann. Hierzu kann von einem hydraulischen Betätigungssystem 36 eine Betätigungskraft, insbesondere zum Schließen der Mehrscheibenkupplung 20, in das Betätigungselement 24 eingeleitet werden. Die Anpressplatte 26 ist über eine als erste Blattfeder 38 ausgestaltete Rückstellfeder und die Zwischenplatte 34 über eine als zweite Blattfeder ausgestaltete Rückstellfeder zumindest mittelbar mit der Gegenplatte 22 verbunden. Mit der Zwischenplatte 34 ist ein die erste Blattfeder 38 kontaktierender Kontaktkörper verbunden, wodurch ein Koppelmechanismus ausgebildet wird, der die Zwischenplatte 34 mit der Anpressplatte 26 in einem definierten Wegübersetzungsverhältnis bewegungskoppelt.

Die Gegenplatte 22, die Anpressplatte 26 und/oder die Zwischenplatte 34 können vorzugsweise an ihren zu den Belagringen 28, 30 weisenden Reibflächen durch Strahlen mit einem Strahlmittel, insbesondere Sandstrahlen und/oder Verdichtungsstrahlen, abrasiv beziehungsweise nicht-abrasiv oberflächenbehandelt sein, um eine geeignete Rauigkeit für einen Einlaufvorgang und/oder eine geeignete Materialverdichtung für eine erhöhte Verschleißfestigkeit vorzusehen. Die durch Strahlen bearbeiteten Reibflächen können in einem die Gegenplatte 22, die Anpressplatte 26 und/oder die Zwischenplatte 34 ausbildenden Plattenkörper etwas zurückgesetzt und versenkt positioniert sein.

## Patentansprüche

1. Verfahren zur Herstellung der Druckplatte (22, 26, 32) einer Reibungskupplung zum reibschlüssigen Verpressen von Reibbelägen (28, 30) einer mit einer Getriebeeingangswelle (16, 18) koppelbaren Kupplungsscheibe (32), bei dem ein aus einem Metallblech hergestellter, oberflächenunbehandelter Plattenkörper bereitgestellt wird,
der Plattenkörper zumindest im Bereich der Reibfläche durch Sandstrahlen und/oder Verdichtungsstrahlen mit einem Strahlmittel gestrahlt wird, und
die durch Strahlen bearbeitete Oberfläche im Vergleich zur oberflächenunbehandelten Oberfläche eine höhere Rauigkeit und/oder eine höhere Materialverdichtung aufweist, **dadurch gekennzeichnet, dass**
beim Strahlen einer von der Reibfläche weg weisenden Rückseite des Plattenkörpers im Vergleich zum Strahlen der Reibfläche unterschiedliche Prozessparameter bezüglich einer Korngröße und/oder Kornform eines Strahlmittels, Menge des Strahlmittels und/oder Geschwindigkeit des Strahlmittels, angewendet werden, wobei der Plattenkörper durch das Strahlen der Rückseite und der Reibfläche zur Einbringung einer Konizität in der Reibfläche ausgebeult wird, und durch die eingebrachte Konizität der Reibfläche die Reibfläche radial außen von dem Plattenkörper hervorragt und radial innen in dem Plattenkörper versenkt ausgebildet ist.

## Claims

1. Method for producing the pressure plate (22, 26, 32) of a friction clutch for pressing friction linings (28, 30) of a clutch disc (32) in a frictionally locking manner, which clutch disc (32) can be coupled to a transmission input shaft (16, 18), in the case of which method a plate body is provided which is manufactured from a metal sheet and the surface of which is untreated, the plate body is blasted with an abrasive at least in the region of the friction face by way of sandblasting and/or compression blasting, and the surface which is treated by way of blasting has a higher roughness and/or a higher material compression in comparison with the untreated surface, **characterized in that** different process parameters with regard to a grain size and/or grain shape of an abrasive, the quantity of the abrasive and/or the velocity of the abrasive, are used during the blasting of a rear side of the plate body which points away from the friction face, in comparison with the blasting of the friction face, the plate body being bulged by way of the blasting of the rear side and the friction face in order to introduce a conicity in the friction face, and the friction face protruding radially to the outside by the plate body as a result of the introduced conicity of the friction face and being of radially inward recessed configuration in the plate body.

## Revendications

1. Procédé de fabrication de la plaque de pression (22, 26, 32) d'un embrayage à friction pour le pressage par engagement par friction de garnitures de friction (28, 30) d'un disque d'embrayage (32) pouvant être accouplé à un arbre d'entrée de boîte de vitesses (16, 18), pour lequel il est fourni un corps de plaque sans traitement de surface, fabriqué à partir d'une tôle métallique,
le corps de plaque, au moins dans la région de la surface de friction, est traité par sablage et/ou grenaillage avec un agent de grenaillage, et la surface traitée par grenaillage présente une plus grande rugosité et/ou une compression du matériau supérieure par comparaison avec la surface sans traitement de surface, **caractérisé en ce que**
lors du grenaillage d'une face arrière du corps de plaque opposée à la surface de friction, on utilise différents paramètres de processus en rapport avec la granulométrie et/ou la forme de grain d'un agent de grenaillage, la quantité de l'agent de grenaillage et/ou la vitesse de l'agent de grenaillage, par comparaison avec le grenaillage de la surface de friction, le corps de plaque étant débosselé par grenaillage de la face arrière et de la surface de friction pour introduire une conicité dans la surface de friction et du fait de l'introduction de la conicité de la surface de friction, la surface de friction faisant saillie radialement à l'extérieur depuis le corps de plaque et étant réalisée de manière renfoncée radialement à l'intérieur dans le corps de plaque.
